# EUROPEAN PATENT APPLICATION

(11) **EP 3 826 385 A1**
(43) Date of publication of application: **26.05.2021**
(21) Application number: 18927154.7
(22) Date of filing: 18.07.2018
(51) Int. Cl.: H04W 64/00, H04W 16/28

(54) **USER DEVICE AND BASE STATION DEVICE**

(71) Applicant: NTT DOCOMO, INC., Chiyoda-ku, Tokyo 100-6150 (JP)
(72) Inventor: OHARA, Tomoya, Tokyo 100-6150 (JP)
(74) Representative: Hoffmann Eitle
(86) International application number: PCT/JP2018/026989
(87) International publication number: WO 2020/016975

(57) **Abstract**

A user device includes a reception unit configured to receive a signal from a base station apparatus, a control unit configured to determine information related to position measurement, based on the received signal, and a transmission unit configured to transmit the information related to the position measurement to the base station apparatus, wherein the information related to the position measurement includes information related to a beam.

## Description

### TECHNICAL FIELD

The present invention relates to a user device and a base station apparatus in a radio communication system.

### BACKGROUND ART

In NR (New Radio) (also referred to as "5G") as a successor system of LTE (Long Term Evolution), techniques satisfying required conditions have been studied, the conditions including systems with a large capacity, high data transmission speed, low latency, simultaneous connection of numerous terminals, low cost, power saving, and the like (for example, Non-Patent Document 1).

In LTE, a technique for enhancing speed of position measurement has been accomplished by use of position measurement information obtained using GNSS (Global Navigation Satellite Systems) and assistance data obtained from a network (for example, Non-Patent Document 2).

### RELATED-ART DOCUMENTS

### Non-Patent Document

Non-Patent Document 1: 3GPP TS 38.300 V15.2.0 (2018-06)
Non-Patent Document 2: 3GPP TS 36.171 V15.0.0 (2018-06)

### SUMMARY OF THE INVENTION

### PROBLEM TO BE SOLVED BY THE INVENTION

In a case where position measurement of a user device is performed in an NR radio communication system, required measurement precision or measurement time might not be achieved by using conventional techniques for position measurement, depending on environment of the user device.

The present invention has been made in view of the above-described problem, and an object of the present invention is to enhance performance in position measurement in a radio communication system.

### MEANS TO SOLVE THE PROBLEM

According to a disclosed technique, a user device is provided, including a reception unit configured to receive a signal from a base station apparatus, a control unit configured to determine information related to position measurement, based on the received signal, and a transmission unit configured to transmit the information related to the position measurement to the base station apparatus, wherein the information related to the position measurement includes information related to a beam.

### ADVANTAGE OF THE INVENTION

According to the disclosed technique, performance in position measurement in a radio communication system can be enhanced.

### BRIEF DESCRIPTION OF THE DRAWINGS

Fig. 1 is a view for describing a radio communication system in an embodiment of the present invention;
Fig. 2 is a sequence chart for describing position measurement in the embodiment of the present invention;
Fig. 3 is a view illustrating one example of a functional arrangement of a base station apparatus 10 in the embodiment of the present invention;
Fig. 4 is a view illustrating one example of a functional arrangement of a user device 20 in the embodiment of the present invention; and
Fig. 5 is a view illustrating one example of a hardware configuration of the base station apparatus 10 or the user device 20 in the embodiment of the present invention.

### Mode for Carrying Out the Invention

An embodiment of the present invention is described below in reference to the drawings. Note that the embodiment described below is but one example, and the embodiment to which the present invention is applied is not limited to the following embodiment.

For the operation of a radio communication system of the embodiment of the present invention, existing techniques are used suitably. However, those existing techniques are, for example, the existing LTE, but are not limited to the existing LTE. The term "LTE" used in the present specification should be read to have a broad meaning inclusive of LTE-Advanced and systems later than LTE-Advanced (for example, NR), unless otherwise mentioned.

In the embodiment of the present invention, duplex systems may be a TDD (Time Division Duplex) system, FDD (Frequency Division Duplex) system, or others (for example, Flexible Duplex or the like).

In the description below, a method of transmitting a signal with a transmission beam may be digital beamforming in which a precoding-vector-multiplied (precoded-by-precoding-vector) signal is transmitted, or may be analog beamforming in which beamforming is achieved by use of a variable phase device in an RF (Radio Frequency) circuit. Similarly, a method of receiving a signal with a reception beam may be digital beamforming in which a received signal is multiplied by a predetermined weight vector, or may be analog beamforming in which beamforming is achieved by use of a variable phase device in the RF circuit. Hybrid beamforming in combination of the digital beamforming and the analog beamforming may be applied. Also, transmitting a signal with a transmission beam may be expressed as transmission of the signal through a particular antenna port. Similarly, receiving a signal with a reception beam may be expressed as reception of the signal through a particular antenna port. The term of antenna port means a logical antenna port or a physical antenna port as defined in 3GPP standards.

Methods of forming a transmission beam and reception beam are not limited to those methods described above. For example, a method of changing an angle of each antenna in a base station apparatus 10 or a user device 20 having multiple antennas may be applied. A method of combining a method of using a precoding vector and a method of changing the angle of the antenna may be applied. Different antenna panels may be switched and utilized. A method of combining methods of using combined antenna panels may be applied. Other methods may be applied. Also, multiple transmission beams different from one another may be used in, for example, a high frequency band. Using multiple transmission beams is referred to as multi-beam operation. Using a single transmission beam is referred to as single beam operation.

In the embodiment of the present invention, a wireless parameter or the like "being configured" may mean that a prescribed value is pre-configured, or may mean that a wireless parameter provided by notification by the base station apparatus 10 or the user device 20 is configured.

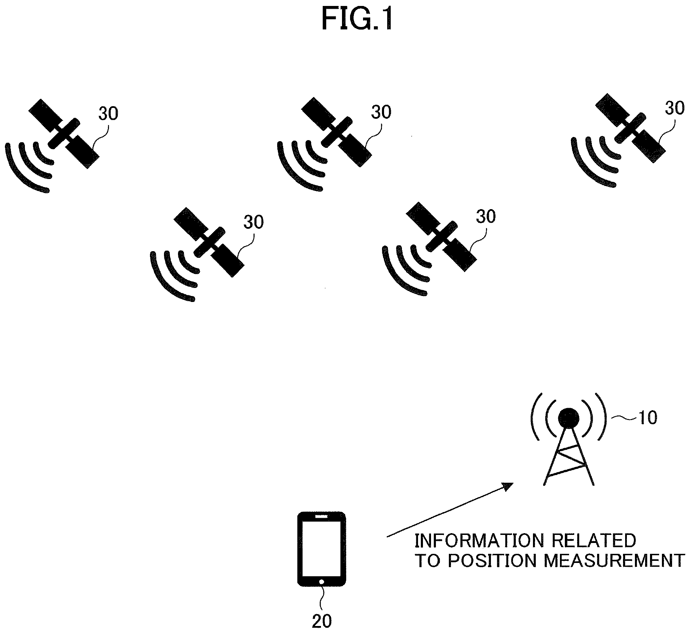

Fig. 1 is a view for describing a radio (wireless) communication system in the embodiment of the present invention. As illustrated in Fig. 1, the radio communication system in the embodiment of the present invention includes the base station apparatus 10, the user device 20, and GNSS satellites 30.

The base station apparatus 10 communicates with the user device 20 through a radio bearer established between itself and the user device 20. The base station apparatus 10 may be referred to as an "eNB (enhanced NodeB)", "NR (New Radio) node", "gNB (Next generation NodeB)", or the like.

The user device 20 is, for example, a terminal, such as a smartphone, for frequently transmitting/receiving data of a large amount (MBB (Mobile Broad band) terminal), a terminal, such as an IoT device, for transmitting/receiving data of a small amount at a low frequency (MTC (Machine Type Communication) terminal), or the like. In the embodiment of the present invention, the user device 20 may comprise a user device 20 of any type (UE category).

The GNSS satellites 30 are navigation satellites included in a satellite position measuring system. The plurality of GNSS satellites 30 transmit a navigation signal to the ground. A device for position measurement obtains position measurement information from the navigation signal.

Examples of existing techniques for position measurement in LTE are A-GNSS (Assisted Global Navigation Satellite system), A-GPS (Assisted Global Positioning System), ECID (Enhanced Cell ID), OTDOA (Observed Time Difference of Arrival), UTDOA (Uplink Time Difference of Arrival), and the like.

In A-GNSS or A-GPS, position measurement is performed by a combination of position measurement information according to GNSS or GPS and assistance data according to a network such as LTE. Examples of the assistance data are a visible satellite list, a satellite signal Doppler, a reference time, and a reference position, all of which are items of information with which a process of signal reception from the navigation satellites can be performed more rapidly.

ECID is a technique for performing position measurement by utilizing information such as a position of a cell visited by the user device 20, RTT (Round Trip Time) and AoA (Angle of Arrival) between the user device 20 and the base station apparatus 10, and the like.

OTDOA is a technique in which information of a time difference measured by the user device 20 between downlink reference signals from a plurality of the base station apparatuses 10 is used, and in which the known position of the base station apparatus 10 and the known time difference information between the base station apparatuses 10 is utilized in the base station apparatus 10, to perform position measurement of the user device 20. A PRS (Positioning RS) may be used as a dedicated reference signal for position measurement.

UTDOA is a technique of performing position measurement by receiving an uplink reference signal (for example, SRS (Sounding reference signal)) by the plurality of the base station apparatuses 10 from the user device 20.

If the environment around the user device 20 is, for example, an indoor area, a densely populated area, an area with many buildings, or the like, it is likely that requirements for measurement precision or measurement time cannot be satisfied by conventional techniques for position measurement. Therefore, it is conceivable to perform position measurement as illustrated in Fig. 1, by transmitting the information related to position measurement in NR to the base station apparatus 10, the information having greater utility for the position measurement than LTE.

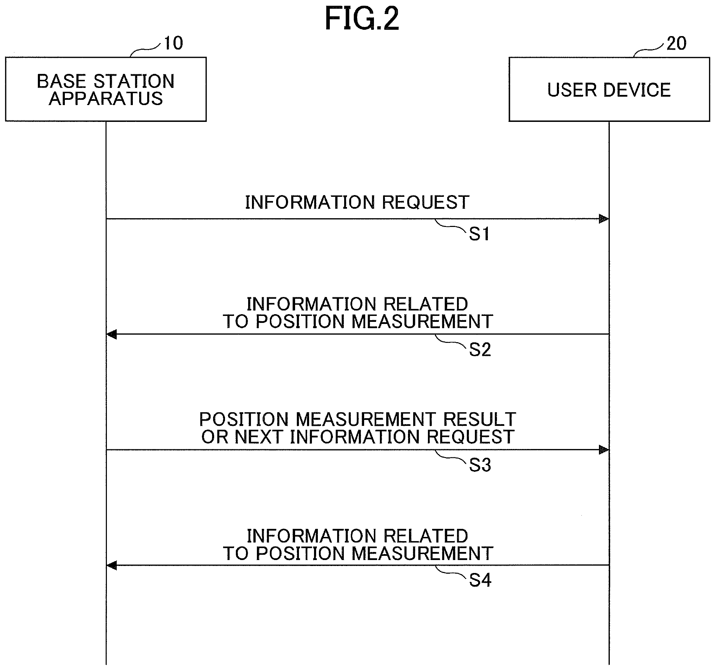

Fig. 2 is a sequence chart for describing the position measurement in the embodiment of the present invention. As illustrated in Fig. 2, the information related to the position measurement is provided as a notification by the user device 20 to the base station apparatus 10 in the embodiment of the present invention.

In step S1, the base station apparatus 10 requests information related to position measurement from the user device 20. The request for information related to position measurement may be a request for a periodic report, or may be a request for a single report. For example, a request for information related to position measurement may be transmitted by the base station apparatus 10 to the user device 20 through RRC (Radio Resource Control) signaling or MAC (Media access control) signaling. It is noted that the user device 20 may autonomously report the information related to the position measurement to the base station apparatus 10 in step S2 or after, without step S1 being performed. For example, the user device 20 may autonomously report the information related to the position measurement to the base station apparatus 10 if an application operating in the user device 20 requests for the position measurement to be performed.

In the step S2, the user device 20 reports the information related to the position measurement to the base station apparatus 10. The information related to the position measurement to be reported to the base station apparatus 10 includes one or a plurality of items 1.-6. of information as follows.

### 1. Information related to signal strength or signal reception quality (RSRP (Reference Signal Received Power), RSRQ (Reference Signal Received Quality), SINR (Signal to interference plus noise ratio), and the like)

Information related to signal strength or signal reception quality may be information of a visited cell, information of neighboring cells, or information of other cells. The neighboring cells are cells where a certain signal is measurable. The other cells are, for example, previously visited cells. Information of one or a plurality of cells is reported for position measurement, among visited cells, neighboring cells or other cells. Information related to signal strength or signal reception quality for each cell may be reported. Information related to signal strength or signal reception quality for multiple beams may be reported. Information related to signal strength or signal reception quality for each beam may be reported. Also, information related to signal strength or signal reception quality measured at layer 1 may be reported. Information related to signal strength or signal reception quality filtered at an upper layer such as layer 3 may be reported.

### 2. Information related to TA (Timing Advance)

TA information may be information of a cell being visited, or information of other cells, for example, previously visited cells, neighboring cells from which information corresponding to the TA value has been obtained by random access, or the like. For example, a TA value may be obtained by performing additional random access for neighboring cells or the like in addition to normal random access. Performing random access may be requested by the base station apparatus 10 to the user device 20. The user device 20 may perform random access autonomously according to a condition or the like. Also, the additional random access can be performed not only for obtaining a TA value for the position measurement but also for purposes of other uses in a combined manner. A TA value of one or a plurality of cells among visited cells or other cells is reported for the position measurement. The TA value to be reported may be a value obtained by the random access procedure, may be a value of a part or all or a total of TA values transmitted by MAC-CE (Media access control-control element) after the random access procedure, and may be both of, or a total of, the value obtained from the random access procedure and the value obtained by the MAC-CE.

### 3. Information related to a value obtained by a sensor

A value obtained by a sensor incorporated in the user device 20 may be reported to the base station apparatus 10. Also, a value, obtained by a sensor present in the periphery of the user device 20 and available to the user device 20, can be reported to the base station apparatus 10. Examples of values obtained by a sensor are an acceleration rate from an acceleration sensor, an air pressure from an air pressure sensor, and physical quantities from other sensors.

### 4. GNSS information

The position measurement information from the GNSS or a known measurement result may be reported to the base station apparatus 10. For example, a latitude or longitude may be reported to the base station apparatus 10.

### 5. Information related to a downlink transmission beam

Information enabling discernment of a beam, according to, for example, information corresponding to an SS (Synchronization signal) block index, information corresponding to a CSI-RS (Channel state information-reference signal) index, or information of another reference signal, or the like can be reported to the base station apparatus 10. The CSI-RS index may be information corresponding to a CSI-RS index in layer 1 or layer 2, or information corresponding to a CSI-RS index in layer 3. In addition to the information related to the downlink transmission beam described above, strength or quality information of a corresponding signal may be reported to the base station apparatus 10. For example, the user device 20 may report an SS block index, an RSRP, RSRQ, or the like obtained by receiving a beam corresponding to the SS block index, to the base station apparatus 10, as one set.

According to strength or quality obtained by the user device 20 measuring a plurality of SS blocks, a plurality of CSI-RSs or other reference signals, information representing an optimal signal may be reported to the base station apparatus 10, and also information representing multiple signals satisfying a predetermined condition may be reported to the base station apparatus 10. For example, the predetermined condition may be a condition of the X signals of which RSRP, RSRQ, or the like is the largest when multiple signals such as SS blocks, CSI-RSs, or the like are measured. Also, the predetermined condition may be a condition in which the user device 20 reports one or a plurality of signals of which RSRP, RSRQ, or the like is included in a relative or absolute predetermined range according to the optimal RSRP, RSRQ, or the like. For example, assuming that the optimal RSRP, RSRQ, or the like is Y dBm or Y dB, a signal of which RSRP, RSRQ, or the like is higher than 0.7 x Y dBm or 0.7 x Y dB can be reported, or a signal of which RSRP, RSRQ, or the like is higher than Y - 3 dBm or Y - 3 dB can be reported. Also, the information related to the downlink transmission beam described above may be information of a visited cell, information of neighboring cells, or information of other cells. The neighboring cells are cells of which a certain signal is measurable. The other cells are, for example, previously visited cells. Information of one or a plurality of cells among the visited cell, neighboring cells, or other cells is reported for the position measurement. The base station apparatus 10 can obtain information on a direction where the user device 20 is located according to the information related to the downlink transmission beam notified by the user device 20.

Also, the user device 20 may optionally not report multiple values if values of strength or quality obtained by measuring, by the user device 20, multiple SS blocks, multiple CSI-RSs or other reference signals, are included within a predetermined range. In other words, when the user device 20 measures and reports a certain signal, information corresponding to an SS block index with a measured value within, for example, 3 dB from a reported measured value, or the same measured value, may optionally not be reported. A measured value with a difference over 3 dB may be reported. Even in this configuration, the user device 20 may optionally not report multiple values if other measured values are included within the predetermined range from the reported measured value.

### 6. Information related to an uplink transmission beam

To the base station apparatus 10, the user device 20 can report one or a plurality of items of uplink transmission beam information that the user device 20 finds to be appropriate, with respect to a visited cell or neighboring cells or visited and neighboring cells, for each of cells, for SS blocks, for CSI-RS, or the like. For example, the uplink transmission beam information is corresponding SRS information or the like. The base station apparatus 10 can obtain information for, in particular, a direction of locating the user device 20 according to the information related to an uplink transmission beam notified by the user device 20.

It is noted that the user device 20 may report a value as is to the base station apparatus 10 or may report a quantized value to the base station apparatus 10, for the values related to signal strength or quality in the above-described information 1.-6. related to the position measurement. For example, the quantization may include providing an index to an RSRP at an interval of 3 dB, and reporting an index of an RSRP the nearest to the measured value to the base station apparatus 10. Also, the above-described value related to the signal strength or quality may be a sampled instantaneous value, or may be a value derived from averaging, at a median value, or in another manner by use of multiple instantaneous values measured within a predetermined period.

It is noted that the information related to the position measurement in the step S2 may be reported by the user device 20 to the base station apparatus 10, for example, according to UCI (Uplink Control Information) through PUCCH (Physical Uplink Control Channel) or PUSCH (Physical Uplink Shared Channel). The information related to the position measurement in the step S2 may be reported by the user device 20 to the base station apparatus 10, for example, through PUSCH, MAC, RRC, or Measurement report including just C plane, just U plane, or both of the C plane or U plane.

In a step S3, the base station apparatus 10 may transmit a result of performing position measurement, according to information related to the position measurement received in the step S2, to the user device 20. Also, the base station apparatus 10 in the step S3 may transmit notification requesting information related to a succeeding position measurement to the user device 20. Also, the base station apparatus 10 in the step S3 may transmit, to the user device 20, information required to perform position measurement in the user device 20 after being calculated according to the information related to the position measurement received in the step S2. For example, the base station apparatus 10 may transmit a result of performing the position measurement or a request for information related to a succeeding position measurement to the user device 20 through RRC signaling or MAC signaling.

In a step S4, the user device 20 reports the information related to the position measurement to the base station apparatus 10 in a manner similar to the step S2 according to the information request received in the step S3.

According to the embodiment described above, the user device 20 can report information related to the position measurement to the base station apparatus 10 either in response to a request from the base station apparatus 10 or autonomously. Also, the base station apparatus 10 can perform position measurement of the user device 20 according to the information related to the position measurement received from the user device 20. Furthermore, the base station apparatus 10 can calculate information required for position measurement to be performed in the user device 20 according to the information related to the position measurement received from the user device 20, and can notify the user device 20 of the required information.

In short, performance in the position measurement can be enhanced in the radio communication system.

### (Device configuration)

An example of a functional arrangement of the base station apparatus 10 and the user device 20 for performing tasks and operations described heretofore is described next. The base station apparatus 10 and the user device 20 include functions for executing the above-described embodiment. However, each of the base station apparatus 10 and the user device 20 may alternatively include only functions of part of the embodiment.

### <Base station apparatus 10>

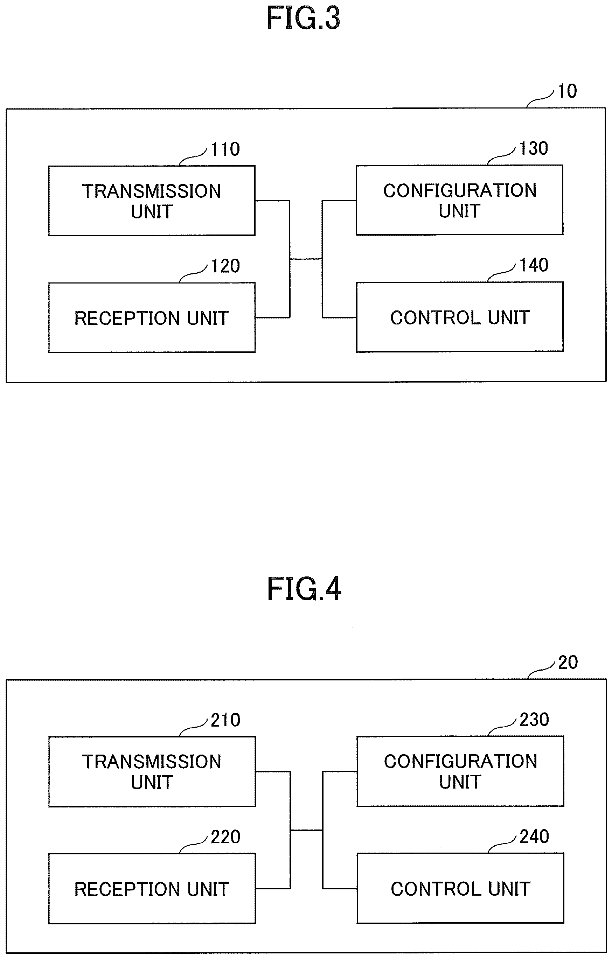

Fig. 3 is a diagram illustrating one example of a functional arrangement of the base station apparatus 10. As illustrated in Fig. 3, the base station apparatus 10 includes a transmission unit 110, a reception unit 120, a configuration unit 130 and a control unit 140. The functional arrangement illustrated in Fig. 3 is merely an example. Division of the functions and names of functional components can be determined optionally so that tasks related to the embodiment of the present invention can be performed.

The transmission unit 110 includes a function for generating a signal to transmit to the side of the user device 20, and for transmitting this signal wirelessly. The reception unit 120 has a function for receiving various types of signals transmitted by the user device 20, and obtaining information from the received signals, for example, information of a higher layer. Also, the transmission unit 110 has a function for transmitting an NR-PSS, NR-SSS, NR-PBCH, DL/UL control signal, and the like to the user device 20. Also, the transmission unit 110 transmits, for example, information indicating that another terminal is coming nearer to the user device 20. The reception unit 120 receives terminal information from the user device 20.

The configuration unit 130 stores pre-configured configuration information, and various items of configuration information to be transmitted to the user device 20, in a storage device, and reads such information from the storage device as required. Contents of the configuration information are, for example, information related to position measurement of the user device 20.

As described in the embodiment, the control unit 140 performs tasks related to position measurement of the user device 20. Also, the control unit 140 performs the position measurement according to the information related to the position measurement obtained from the user device 20. Furthermore, the control unit 140 generates assistance data according to the information related to the position measurement obtained from the user device 20. Functional components in the control unit 140 related to signal transmission may be included in the transmission unit 110. Functional components in the control unit 140 related to signal reception may be included in the reception unit 120.

### <User device 20>

Fig. 4 is a diagram illustrating one example of a functional arrangement of the user device 20. As illustrated in Fig. 4, the user device 20 includes a transmission unit 210, a reception unit 220, a configuration unit 230, and a control unit 240. The functional arrangement illustrated in Fig. 4 is merely an example. Division of the functions and names of functional components can be determined optionally so that tasks related to the embodiment of the present invention can be performed.

The transmission unit 210 generates a signal for transmission from data for transmission, and wirelessly transmits this signal for transmission. The reception unit 220 wirelessly receives various signals, and obtains signals of higher layers from the received signals of the physical layer. Also, the reception unit 220 has functions for receiving an NR-PSS, NR-SSS, NR-PBCH, DL/UL/SL control signal, and the like transmitted by the base station apparatus 10. Also, for example, the transmission unit 210 in D2D communication transmits a PSCCH (Physical Sidelink Control Channel), PSSCH (Physical Sidelink Shared Channel), PSDCH (Physical Sidelink Discovery Channel), PSBCH (Physical Sidelink Broadcast Channel), and the like to another user device 20. The reception unit 120 receives a PSCCH, PSSCH, PSDCH, PSBCH, or the like from the other user device 20.

The configuration unit 230 stores various items of the configuration information in a storage device, and reads the configuration information from the storage device as required, the configuration information being received by the reception unit 220 from the base station apparatus 10 or the user device 20. Also, the configuration unit 230 stores pre-configured configuration information. Contents of the configuration information are, for example, information related to position measurement of the user device 20.

As has been described in the embodiment, the control unit 240 reports information related to position measurement to the base station apparatus 10. The control unit 240 performs the position measurement according to the assistance data obtained from the base station apparatus 10. Functional components in the control unit 240 related to signal transmission may be included in the transmission unit 210. Functional components in the control unit 240 related to signal reception may be included in the reception unit 220.

### (Hardware configuration)

The views for the functional arrangement (Figs. 3 and 4) used for describing the above-described embodiment of the present invention illustrate blocks in units of functions. These functional blocks (components) are implemented by any combination of hardware and/or software. Furthermore, means for implementing each functional block is not particularly limited. Namely, each functional block may be implemented by a single device with multiple elements that are physically and/or logically coupled, or may be implemented by multiple devices obtained by directly and/or indirectly (e.g., by wire and/or wirelessly) connecting the two or more devices separated physically and/or logically.

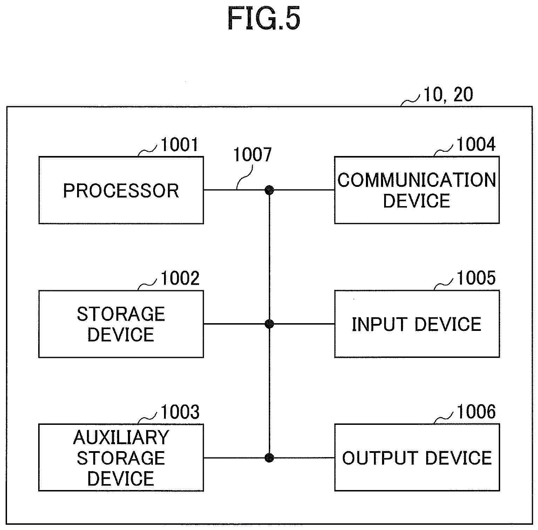

For example, the base station apparatus 10 and the user device 20 in one embodiment of the present invention may function as computers for performing processes related to the embodiment according to the present invention. Fig. 5 is a diagram illustrating one example of a hardware configuration of a radio communication device being the base station apparatus 10 or the user device 20 according to the embodiment of the present invention. Each of the base station apparatus 10 and the user device 20 described above can be configured physically as a computer device including a processor 1001, a storage device 1002, an auxiliary storage device 1003, a communication device 1004, an input device 1005, an output device 1006, a bus 1007, and the like.

Note that, in the following description, the term "apparatus" may be replaced with a circuit, device, unit, and the like. The hardware configuration of the base station apparatus 10 and the user device 20 may be configured to include one or more of the respective devices illustrated in the figures and denoted at 1001-1006, or may be configured without including a part of the devices.

The respective functions in the base station apparatus 10 and the user device 20 are accomplished by reading predetermined software (programs) on hardware such as the processor 1001, the storage device 1002, and the like, performing calculation in the processor 1001, and controlling communication in the communication device 1004 and reading and/or writing of data in the storage device 1002 and the auxiliary storage device 1003.

For example, the processor 1001 causes an Operating System to operate so as to control the entire computer. The processor 1001 may be formed of a central processing unit (CPU: Central Processing Unit) including an interface with a peripheral device, control device, arithmetic unit, register, and the like.

Furthermore, the processor 1001 reads a program (program code), software module, or data from the auxiliary storage device 1003 and/or the communication device 1004 to the storage device 1002, and executes various processes in accordance with these. As the program, a program is used that is for causing a computer to execute at least a part of the operation described in the embodiment above. For example, the transmission unit 110, the reception unit 120, the configuration unit 130, and the control unit 140 in the base station apparatus 10 illustrated in Fig. 3 may be implemented by a control program stored in the storage device 1002 and executed by the processor 1001. Also, for example, the transmission unit 210, the reception unit 220, the configuration unit 230, and the control unit 240 in the user device 20 illustrated in Fig. 4 may be implemented by a control program stored in the storage device 1002 and executed by the processor 1001. It is described that the above-described various processes are performed by the single processor 1001, but they may be simultaneously or sequentially performed by two or more of the processors 1001. The processor 1001 may be implemented by one or more chips. Note that the program may be transmitted from a network through an electrical communication line.

The storage device 1002 is a computer readable recording medium, and may be formed of, for example, at least one of a ROM (Read Only Memory), EPROM (Erasable Programmable ROM), EEPROM (Electrically Erasable Programmable ROM), RAM (Random Access Memory), or the like. The storage device 1002 may be referred to as a register, cache, main memory (main storage device), and the like. The storage device 1002 can store a program (program code), a software module, and the like executable for performing processing according to one embodiment of the present invention.

The auxiliary storage device 1003 is a computer readable recording medium, and can be formed of, for example, at least one of an optical disc such as a CD-ROM (Compact Disc ROM), hard disk drive, flexible disc, magneto-optical disk (for example, compact disk, digital versatile disk, and Blu-ray (registered trademark) disk), smart card, flash memory (e.g., card, stick and key drive), floppy (registered trademark) disk, magnetic strip, and the like. The auxiliary storage device 1003 may be referred to as an auxiliary storage device. The above-described storage medium may be, for example, a database, server, or any other appropriate medium, including the storage device 1002, and/or the auxiliary storage device 1003.

The communication device 1004 is hardware (transmission/reception device) for executing communication between computers through a wired and/or wireless network, and is also referred to as, for example, a network device, network controller, network card, communication module, and the like. For example, the transmission unit 110 and the reception unit 120 in the base station apparatus 10 may be implemented by the communication device 1004. Also, the transmission unit 210 and the reception unit 220 in the user device 20 may be implemented by the communication device 1004.

The input device 1005 is an input device (e.g., a keyboard, mouse, microphone, switch, button, sensor, and the like) for receiving an input from the outside. The output device 1006 is an output device (e.g., a display, speaker, LED lamp, and the like) for implementing an output to the outside. Note that the input device 1005 and the output device 1006 may be configured to be integrated (for example, a touch panel) .

Furthermore, the respective devices, such as the processor 1001 and the storage device 1002, are connected by the bus 1007 for communication of information. The bus 1007 may be formed of a single bus, or may be formed of different buses among the devices.

Furthermore, the base station apparatus 10 and the user device 20 may be constituted to include hardware, such as a microprocessor, digital signal processor (DSP: Digital Signal Processor), ASIC (Application Specific Integrated Circuit), PLD (Programmable Logic Device), FPGA (Field Programmable Gate Array), and the like. By the hardware, a part of or all of the functional blocks may be implemented. For example, the processor 1001 may be implemented by at least one of these hardware components.

### (Conclusion of the embodiment)

As has been described heretofore, according to the embodiment of the present invention, a user device is provided, including a reception unit configured to receive a signal from a base station apparatus, a control unit configured to determine information related to position measurement based on the received signal, and a transmission unit configured to transmit the information related to the position measurement to the base station apparatus, wherein the information related to the position measurement includes information related to a beam.

Owing to this configuration, the user device 20 can report information related to the position measurement to the base station apparatus 10 either in response to a request from the base station apparatus 10 or autonomously. Also, the base station apparatus 10 can perform position measurement of the user device 20 according to the information related to the position measurement received from the user device 20. Furthermore, the base station apparatus 10 can calculate information required for position measurement to be performed in the user device 20 according to the information related to the position measurement received from the user device 20, and notify the user device 20 of the required information. In short, performance in the position measurement can be enhanced in the radio communication system.

The information related to the position measurement may include information related to strength or quality of the received signal. Owing to this configuration, performance of position measurement can be enhanced in the user device 20 as the information related to strength or quality of the received signal is reported to the base station apparatus 10.

The information related to the beam may include information related to a downlink transmission beam, and the information related to the downlink transmission beam may include an SS (Synchronization signal) block index or a CSI-RS (Channel state information-reference signal) index. Owing to this configuration, performance of position measurement can be enhanced in the user device 20 as the information related to the downlink transmission beam is reported to the base station apparatus 10.

The information related to the downlink transmission beam may include an SS block index or CSI-RS index corresponding to a signal having optimal strength or quality among signals corresponding to a plurality of SS block indexes or a plurality of CSI-RS indexes. Owing to this configuration, performance of position measurement can be enhanced in the user device 20 as the information related to the optimal downlink transmission beam is reported to the base station apparatus 10.

The information related to the beam may include information related to an uplink transmission beam appropriate for an SS block or a CSI-RS to which the received signal corresponds. Owing to this configuration, performance of position measurement can be enhanced in the user device 20 as the information related to the uplink transmission beam is reported to the base station apparatus 10.

Also, according to the embodiment of the present invention, a base station apparatus is provided, including a transmission unit configured to transmit a signal to a user device, a reception unit configured to receive information related to position measurement from the user device, the information including information related to a beam, and a control unit configured to perform position measurement of the user device based on the information related to the position measurement.

Owing to this configuration, the base station apparatus 10 can perform position measurement of the user device 20 according to the information related to the position measurement received from the user device 20. Furthermore, the base station apparatus 10 can calculate information required for position measurement to be performed in the user device 20 according to the information related to the position measurement received from the user device 20, and notify the user device 20 of the required information. In short, performance in the position measurement can be enhanced in the radio communication system.

### (Supplement to the embodiment)

The embodiment of the present invention has been described above; however, the disclosed invention is not limited to the embodiment, and a person ordinarily skilled in the art will appreciate various variations, modifications, alternatives, replacements, and the like. Specific examples of numerical values are used in the description in order to facilitate understanding of the invention, but these numerical values are merely examples, and any appropriate values may be used, unless otherwise indicated. Divisions of the described items in the above description are not essential to the present invention. Depending on necessity, subject matter described in two or more described items may be combined and used, and subject matter described in a described item may be applied to subject matter described in another described item (as long as there is no contradiction) . A boundary of a functional component or a processor in the functional block diagrams may not necessarily correspond to a boundary of a physical part. An operation by a plurality of functional components may be physically executed by a single part, or an operation of a single functional component may be physically executed by a plurality of parts. In the processing procedures described in the embodiment, the order can be changed reversely, as long as there is no contradiction. For the convenience of description, the base station apparatus 10 and the user device 20 are described by using the functional block diagrams; however, such devices may be implemented in hardware, software, or combinations thereof. The software to be operated by the processor included in the base station apparatus 10 in accordance with the embodiment of the present invention, and the software to be operated by the processor included in the user device 20 in accordance with the embodiment of the present invention may be respectively stored in any appropriate storage medium, such as a random access memory (RAM), flash memory, read-only memory (ROM), EPROM, EEPROM, register, hard disk drive (HDD), removable disk, CD-ROM, database, server, and the like.

Notification of information is not limited to the aspects/embodiment described in this specification, and may be given by any other methods. For example, the notification of information may be performed by physical layer signaling (for example, Downlink Control Information (DCI), Uplink Control Information (UCI)), higher layer signaling (for example, Radio Resource Control (RRC) signaling, Medium Access Control (MAC) signaling, broadcast information (Master Information Block (MIB), System Information Block (SIB))), or other signals, or a combination thereof. Further, the RRC signaling may be referred to as an RRC message and may be, for example, an RRC Connection Setup message, an RRC Connection Reconfiguration message, or the like.

Each of aspects/embodiment described in the present specification may be applied to LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), a system using other appropriate systems, and/or a next generation system extended based on these systems.

The processing procedures, the sequences, the flow charts, and the like of the respective aspects/embodiment described in this specification may be reversed in order as long as there is no contradiction. For example, the method described in this specification presents elements of various steps in an exemplary order and is not limited to a presented specific order.

A specific operation disclosed to be performed in the base station apparatus 10 in the present specification may be performed in an upper node in some cases. In a network composed of one or a plurality of network nodes having the base station apparatus 10, it is apparent that various operations that are performed for communication with the user device 20 can be performed by the base station apparatus 10 and/or another network node different from the base station apparatus 10 (e.g. MME or S-GW, though not limited thereto). Although the case where another network node different from the base station apparatus 10 is single is described in the example above, a combination of a plurality of other network nodes (e.g. MME and S-GW) may be used.

The respective aspects/embodiment disclosed in the present specification can be used singly, used in combination, and used by switching in operation.

The user device 20 can be also referred to by those skilled in the art as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or several other appropriate terms.

The base station apparatus 10 may be referred to by those skilled in the art as NB (NodeB), eNB (evolved NodeB), gNB, base station (Base Station), or several other appropriate terms.

The terms "determining" and "determining" used in this specification may include a wide variety of actions. For example, "determining" and "determining" may include events in which events such as judging, calculating, computing, processing, deriving, investigating, looking up (for example, looking up in a table, a database, or another data structure), or ascertaining are regarded as "determining" or "determining." Further, "determining" and "determining" may include events in which events such as receiving (for example, receiving information), transmitting (for example, transmitting information), input, output, or accessing (for example, accessing data in a memory) are regarded as "determining" or "determining." Further, "determining" and "determining" may include events in which events such as resolving, selecting, choosing, establishing, or comparing are regarded as "determining" or "determining." In other words, "determining" and "determining" may include events in which a certain operation is regarded as "determining" or "determining."

As used in the present specification, the phrase "based on" does not mean "based only on" unless explicitly stated otherwise. In other words, the phrase "based on" means both "based only on" and "based on at least".

As long as the terms "include", "including", and variations thereof are used in the specification or claims, these terms are intended to be inclusive in a manner similar to the term "comprising". Furthermore, it is intended that the term "or" used in the specification or claims is not an "exclusive OR".

In the entirety of the present disclosure, if an article is added by translation, for example a, an and the in English, the elements with those articles can encompass a plurality of elements, unless otherwise indicated apparently in the context.

In the embodiment of the present invention, RSRP or RSRQ is one example of strength or quality of a signal.

Although the present invention is described in detail heretofore, it is apparent to those skilled in the art that the present invention is not limited to the embodiment described in this specification. The present invention can be implemented as a modified and changed form without deviating from the spirit and scope of the present invention defined by the claims. Accordingly, the description of the present specification is given solely by way of illustration and does not have any restrictive meaning to the present invention.

### REFERENCE SIGNS LIST

- 10: base station apparatus
- 110: transmission unit
- 120: reception unit
- 130: configuration unit
- 140: control unit
- 20: user device
- 210: transmission unit
- 220: reception unit
- 230: configuration unit
- 240: control unit
- 30: GNSS satellites
- 1001: processor
- 1002: storage device
- 1003: auxiliary storage device
- 1004: communication device
- 1005: input device
- 1006: output device

## Claims

1. A user device comprising:
a reception unit configured to receive a signal from a base station apparatus;
a control unit configured to determine information related to position measurement, based on the received signal; and
a transmission unit configured to transmit the information related to the position measurement to the base station apparatus,
wherein the information related to the position measurement includes information related to a beam.

2. The user device as claimed in claim 1, wherein the information related to the position measurement includes information related to strength or quality of the received signal.

3. The user device as claimed in claim 1, wherein the information related to the beam includes information related to a downlink transmission beam, and the information related to the downlink transmission beam includes an Synchronization signal (SS) block index or a Channel state information-reference signal (CSI-RS) index.

4. The user device as claimed in claim 3, wherein the information related to the downlink transmission beam includes an SS block index or a CSI-RS index corresponding to a signal having optimal strength or quality among signals corresponding to a plurality of SS block indexes or a plurality of CSI-RS indexes.

5. The user device as claimed in claim 1, wherein the information related to the beam includes information related to an uplink transmission beam appropriate for an SS block or a CSI-RS to which the received signal corresponds.

6. A base station apparatus comprising:
a transmission unit configured to transmit a signal to a user device;
a reception unit configured to receive information related to position measurement from the user device, the information including information related to a beam; and
a control unit configured to perform position measurement of the user device, based on the information related to the position measurement.
